# EUROPEAN PATENT SPECIFICATION

(11) **EP 3 109 212 B1**
(45) Date of publication and mention of the grant of the patent: **16.12.2020**
(21) Application number: 15751526.3
(22) Date of filing: 20.02.2015
(51) Int. Cl.: C03C 27/12, B32B 17/10, C08L 29/14, C08K 5/103

(54) **INTERMEDIATE FILM FOR LAMINATED GLASS, AND LAMINATED GLASS**
ZWISCHENFOLIE FÜR VERBUNDGLAS UND VERBUNDGLAS
FILM INTERMÉDIAIRE POUR VERRE FEUILLETÉ, ET VERRE FEUILLETÉ

(30) Priority: 20.02.2014 JP 2014030891
(43) Date of publication of application: 28.12.2016
(73) Proprietor: Sekisui Chemical Co., Ltd., Osaka-shi, Osaka 530-8565 (JP)
(72) Inventor: SASAKI, Jun, Kouka-shi, Shiga 528-8585 (JP); KOMATSU, Ryousuke, Kouka-shi, Shiga 528-8585 (JP); IWAMOTO, Tatsuya, Kouka-shi, Shiga 528-8585 (JP)
(74) Representative: Ter Meer Steinmeister & Partner
(86) International application number: PCT/JP2015/054839
(87) International publication number: WO 2015/125931

(56) References cited:
- EP-A1- 2 977 403
- WO-A1-2008/143195
- WO-A1-2008/143195
- WO-A1-2012/077689
- JP-A- 2011 026 184
- US-A- 5 190 826
- US-A1- 2011 049 434
- US-A1- 2011 229 714
- US-A1- 2012 003 482
- US-A1- 2012 041 123
- DATABASE WPI Week 200333 12 November 2002 (2002-11-12) Thomson Scientific, London, GB; AN 2003-346041 XP002772761, -& JP 2002 326844 A (SEKISUI CHEM IND CO LTD) 12 November 2002 (2002-11-12)
- DATABASE WPI Week 199127 28 May 1991 (1991-05-28) Thomson Scientific, London, GB; AN 1991-198572 XP002772762, -& JP H03 124733 A (NIPPON MONSANTO KK) 28 May 1991 (1991-05-28)
- DATABASE WPI Week 200258 10 April 2002 (2002-04-10) Thomson Scientific, London, GB; AN 2002-541273 XP002772763, -& JP 2002 104878 A (SEKISUI CHEM IND CO LTD) 10 April 2002 (2002-04-10)
- DATABASE WPI Week 199814 27 January 1998 (1998-01-27) Thomson Scientific, London, GB; AN 1998-154105 XP002772764, -& JP H10 25390 A (SEKISUI CHEM IND CO LTD) 27 January 1998 (1998-01-27)
- DATABASE WPI Week 200403 10 September 2003 (2003-09-10) Thomson Scientific, London, GB; AN 2004-026528 XP002772777, -& JP 2003 252656 A (SEKISUI CHEM IND CO LTD) 10 September 2003 (2003-09-10)

## Description

### TECHNICAL FIELD

The present invention relates to an interlayer film for laminated glass which is used for laminated glass. Moreover, the present invention relates to laminated glass prepared with the interlayer film for laminated glass.

### BACKGROUND ART

Since laminated glass generates only a small amount of scattering glass fragments even when subjected to external impact and broken, laminated glass is excellent in safety. As such, the laminated glass is widely used for automobiles, railway vehicles, aircraft, ships, buildings and the like. The laminated glass is produced by sandwiching an intermediate film between a pair of glass plates.

As an example of the interlayer film for laminated glass, the following Patent Document 1 discloses a sound insulating layer including 100 parts by weight of a polyvinyl acetal resin with an acetalization degree of 60 to 85% by mole, 0.001 to 1.0 part by weight of at least one kind of metal salt among an alkali metal salt and an alkaline earth metal salt, and a plasticizer in an amount greater than 30 parts by weight. This sound insulating layer can be used alone as a single-layered interlayer film.

Furthermore, the following Patent Document 1 also describes a multilayer interlayer film in which the sound insulating layer and another layer are layered. Another layer to be layered with the sound insulating layer includes 100 parts by weight of a polyvinyl acetal resin with an acetalization degree of 60 to 85% by mole, 0.001 to 1.0 part by weight of at least one kind of metal salt among an alkali metal salt and an alkaline earth metal salt, and a plasticizer in an amount less than or equal to 30 parts by weight.

### Related Art Document

### Patent Document

Patent Document 1: JP 2007-070200 A

JP 2002-326844 A relates to an intermediate membrane for laminating glass, which is a resin membrane comprising a plasticizer and a polyvinyl acetal resin (c) which is a mixture of a polyvinyl acetal resin (a) and a polyvinyl acetal resin (b) wherein the cloud point (Ta) of a mixture of the plasticizer and the polyvinyl acetal resin (a) is <50 °C, the cloud point (Tb) of a mixture of the plasticizer and the polyvinyl acetal resin (b) is >50 °C, and Tb-Ta≥50.

### SUMMARY OF THE INVENTION

### PROBLEMS TO BE SOLVED BY THE INVENTION

In recent years, for the purpose of reducing the environmental load, a technique for reusing such an interlayer film for laminated glass described in Patent Document 1 as a part of the raw material of a new interlayer film for laminated glass has been studied. However, when an interlayer film for laminated glass is reused as a part of the raw material of a new interlayer film for laminated glass, there are cases where the transparency of the interlayer film for laminated glass is lowered due to an existence state of a thermoplastic resin such as a polyvinyl acetal resin.

An object of the present invention is to provide an interlayer film for laminated glass with which the transparency can be enhanced, and further specifically, an object of the present invention is to provide an interlayer film for laminated glass with which the transparency can be enhanced even when different kinds of thermoplastic resins are combinedly used. Moreover, the present invention is also aimed at providing laminated glass prepared with the interlayer film for laminated glass.

### MEANS FOR SOLVING THE PROBLEMS

According to a broad aspect of the present invention, there is provided an interlayer film for laminated glass according to claim 1, which is suitable to be arranged between a first lamination glass member and a second lamination glass member to obtain a laminated glass, the interlayer film being obtained by mixing a first composition containing a first thermoplastic resin having a hydroxyl group and a plasticizer and a second composition containing a second thermoplastic resin having a hydroxyl group and a plasticizer;
wherein the first thermoplastic resin is a polyvinyl acetal resin, which is obtained by acetalizing polyvinyl alcohol having an average polymerization degree of greater than or equal to 1500, and the second thermoplastic resin is a polyvinyl acetal resin,
the content ratio of the hydroxyl group of the first thermoplastic resin is higher by 4% by mole or more than the content ratio of the hydroxyl group of the second thermoplastic resin, and
the content of a polyvinyl acetal resin with a content ratio of the hydroxyl group less than 25% by mole is less than or equal to 4.5% by weight in 100% by weight of polyvinyl acetal resins included in the interlayer film,
the ratio of the complex viscosity at 200°C of the second composition to the complex viscosity at 200°C of the first composition is less than 4.5 or the first thermoplastic resin and the second thermoplastic resin is a first thermoplastic resin and a second thermoplastic resin which satisfy the ratio of the complex viscosity at 200°C of the second composition obtained by mixing 100 parts by weight of the second thermoplastic resin and 60 parts by weight of triethylene glycol di-2-ethylhexanoate to the complex viscosity at 200°C of the first composition obtained by mixing 100 parts by weight of the first thermoplastic resin and 40 parts by weight of triethylene glycol di-2-ethylhexanoate to be less than 4.5, respectively, and wherein the complex viscosity at 200°C is measured according to the method in the description.

Specific aspects of the present invention are defined in the dependent claims. According to another broad aspect of the present invention, there is provided laminated glass including a first laminated glass member, a second laminated glass member and an interlayer film for laminated glass described above, wherein the interlayer film is arranged between the first laminated glass member and the second laminated glass member.

### EFFECT OF THE INVENTION

Since the interlayer film for laminated glass according to the present invention is obtained by mixing a first composition containing a first thermoplastic resin having a hydroxyl group and a plasticizer and a second composition containing a second thermoplastic resin having a hydroxyl group and a plasticizer, the content ratio of the hydroxyl group of the first thermoplastic resin is higher than the content ratio of the hydroxyl group of the second thermoplastic resin, and the ratio of the complex viscosity at 200°C of the second composition to the complex viscosity at 200°C of the first composition is less than 4.5 or the first thermoplastic resin and the second thermoplastic resin are a first thermoplastic resin and a second thermoplastic resin which satisfy the ratio of the complex viscosity at 200°C of the second composition obtained by mixing 100 parts by weight of the second thermoplastic resin and 60 parts by weight of triethylene glycol di-2-ethylhexanoate to the complex viscosity at 200°C of the first composition obtained by mixing 100 parts by weight of the first thermoplastic resin and 40 parts by weight of triethylene glycol di-2-ethylhexanoate to be less than 4.5, respectively, it is possible to enhance the transparency.

Since the interlayer film for laminated glass according to the present invention includes a first thermoplastic resin having a hydroxyl group, a second thermoplastic resin having a hydroxyl group and a plasticizer, the content ratio of the hydroxyl group of the first thermoplastic resin is higher than the content ratio of the hydroxyl group of the second thermoplastic resin, and the first thermoplastic resin and the second thermoplastic resin are a first thermoplastic resin and a second thermoplastic resin which satisfy the ratio of the complex viscosity at 200°C of the second composition obtained by mixing 100 parts by weight of the second thermoplastic resin and 60 parts by weight of triethylene glycol di-2-ethylhexanoate to the complex viscosity at 200°C of the first composition obtained by mixing 100 parts by weight of the first thermoplastic resin and 40 parts by weight of triethylene glycol di-2-ethylhexanoate to be less than 4.5, respectively, it is possible to enhance the transparency.

### BRIEF DESCRIPTION OF DRAWINGS

[Fig. 1] Fig. 1 is a partially cut-away sectional view schematically showing a multi-layered interlayer film including an interlayer film for laminated glass in accordance with the first embodiment of the present invention.
[Fig. 2] Fig. 2 is a partially cut-away sectional view schematically showing an interlayer film for laminated glass in accordance with the second embodiment of the present invention.
[Fig. 3] Fig. 3 is a partially cut-away sectional view schematically showing an example of laminated glass prepared with the multi-layered interlayer film shown in Fig. 1.

### MODE(S) FOR CARRYING OUT THE INVENTION

Hereinafter, the details of the present invention will be described.
(1) The interlayer film for laminated glass according to the present invention is obtained by mixing a first composition containing a first thermoplastic resin having a hydroxyl group and a plasticizer and a second composition containing a second thermoplastic resin having a hydroxyl group and a plasticizer. The interlayer film for laminated glass according to the present invention includes a first thermoplastic resin having a hydroxyl group, a second thermoplastic resin having a hydroxyl group and a plasticizer. Moreover, in the interlayer film for laminated glass according to the present invention, the content ratio of the hydroxyl group of the first thermoplastic resin is higher than the content ratio of the hydroxyl group of the second thermoplastic resin. Furthermore, in the interlayer film for laminated glass according to the present invention, (1-1) the ratio (η2/η1) of the complex viscosity (η2) at 200°C of the second composition to the complex viscosity (η1) at 200°C of the first composition is less than 4.5 or (1-2) the first thermoplastic resin and the second thermoplastic resin are a first thermoplastic resin and a second thermoplastic resin which satisfy the ratio of the complex viscosity at 200°C of a composition (second composition) obtained by mixing 100 parts by weight of the second thermoplastic resin and 60 parts by weight of triethylene glycol di-2-ethylhexanoate to the complex viscosity at 200°C of a composition (first composition) obtained by mixing 100 parts by weight of the first thermoplastic resin and 40 parts by weight of triethylene glycol di-2-ethylhexanoate to be less than 4.5, respectively. In the case of the above-mentioned (1-2), in the interlayer film for laminated glass, a plasticizer other than triethylene glycol di-2-ethylhexanoate may be used. In the case of the above-mentioned (1-2), in the interlayer film for laminated glass, relative to 100 parts by weight of the first thermoplastic resin or the second thermoplastic resin, the plasticizer in a content other than 40 parts by weight or 60 parts by weight may be used. The constitution of the above-mentioned (1-1) is preferred and the constitution of the above-mentioned (1-2) is also preferred.
(2) The interlayer film for laminated glass according to the present invention includes a first thermoplastic resin having a hydroxyl group, a second thermoplastic resin having a hydroxyl group and a plasticizer. Moreover, in the interlayer film for laminated glass according to the present invention, the content ratio of the hydroxyl group of the first thermoplastic resin is higher than the content ratio of the hydroxyl group of the second thermoplastic resin. Furthermore, in the interlayer film for laminated glass according to the present invention, the first thermoplastic resin and the second thermoplastic resin are a first thermoplastic resin and a second thermoplastic resin which satisfy the ratio of the complex viscosity at 200°C of a composition (second composition) obtained by mixing 100 parts by weight of the second thermoplastic resin and 60 parts by weight of triethylene glycol di-2-ethylhexanoate to the complex viscosity at 200°C of a composition (first composition) obtained by mixing 100 parts by weight of the first thermoplastic resin and 40 parts by weight of triethylene glycol di-2-ethylhexanoate to be less than 4. 5, respectively. In this interlayer film for laminated glass, a plasticizer other than triethylene glycol di-2-ethylhexanoate may be used. In this interlayer film for laminated glass, relative to 100 parts by weight of the first thermoplastic resin or the second thermoplastic resin, the plasticizer in a content other than 40 parts by weight or 60 parts by weight may be used.

Since the interlayer film for laminated glass (hereinafter, sometimes abbreviated as the interlayer film) according to the present invention has the foregoing configuration, in particular, since the above-mentioned ratio (η2/η1) is less than 4.5, it is possible to enhance the transparency in the interlayer film according to the present invention.

With regard to the measurement method of the complex viscosity, for example, the complex viscosity can be measured by the following method. In a molding flask (2 cm in longitudinal length by 2 cm in transversal length by 0.76 mm in thickness) arranged between two sheets of polyethylene terephthalate (PET) films, 1 g of the first composition is placed, preheated for 10 minutes at a temperature of 150°C and under a pressure of 0 kg/cm², and then, press-molded for 15 minutes under a pressure of 80 kg/cm². Afterward, in a hand press machine previously set to 20°C, the press-molded first composition is installed and pressed for 10 minutes at 10 MPa to be cooled. Then, from the molding flask arranged between the two sheets of PET films, one sheet of the PET film is peeled off, and the press-molded product is stored for 24 hours in a constant-temperature and constant-humidity chamber (the humidity of 30% (±3%), the temperature of 23°C), and then, measured for the viscoelasticity, using the ARES-G2 available from TA Instruments Japan Inc., in accordance with JIS K 7244-10 (ISO 6721-10) to measure the complex viscosity. As a jig used at the time of the viscoelasticity measurement, a parallel plate with a diameter of 8 mm is used. Moreover, the viscoelasticity measurement is performed under conditions of a frequency of 1 Hz and a strain of 8% at the measurement temperature of 200°C. The obtained complex viscosity is read as a value of the complex viscosity of the first composition at 200°C. The complex viscosity of the second composition is measured in the same manner.

From the viewpoint of effectively improving the transparency, the above-mentioned ratio (η2/η1) is preferably less than or equal to 4.3, more preferably less than or equal to 3.1, further preferably less than or equal to 2 and especially preferably less than or equal to 1.

The complex viscosity at 200°C of the first composition is preferably greater than or equal to 3000 Pa●s, more preferably greater than or equal to 4000 Pa●s, further preferably greater than or equal to 6500 Pa●s and especially preferably greater than or equal to 7000 Pa●s. Although the upper limit of the complex viscosity at 200°C of the first composition is not particularly limited, the complex viscosity is preferably less than or equal to 15000 Pa●s, more preferably less than or equal to 10000 Pa●s and further preferably less than or equal to 8000 Pa●s. The complex viscosity at 200°C of the second composition is preferably greater than or equal to 2000 Pa●s, more preferably greater than or equal to 2500 Pa●s, preferably less than or equal to 30000 Pa●s, more preferably less than or equal to 25000 Pa●s and further preferably less than or equal to 20000 Pa●s.

Because it is easy to make the above-mentioned ratio (η2/η1) less than or equal to the above upper limit and the transparency can be effectively improved, in the interlayer film according to the present invention, the first and second thermoplastic resins are a polyvinyl acetal resin, and by controlling the synthesis condition of the polyvinyl acetal resin, the complex viscosity can be adjusted.

Because it is easy to make the above-mentioned ratio (η2/η1) less than or equal to the above upper limit and the transparency can be effectively improved, the first thermoplastic resin is a polyvinyl acetal resin and the second thermoplastic resin is a polyvinyl acetal resin.

Either 1) a first interlayer film including a first thermoplastic resin and a second interlayer film including a second thermoplastic resin may be used, 2) an interlayer film including a first thermoplastic resin and a second thermoplastic resin as a new raw material may be used, 3) an interlayer film including a second thermoplastic resin and a first thermoplastic resin as a new raw material may be used, or 4) a first thermoplastic resin and a second thermoplastic resin as new raw materials may be used. Examples of the interlayer film including a thermoplastic resin include unwanted portions (waste pieces) at both ends of an interlayer film which are generated in a production process of the interlayer film, unwanted portions (trimmings) at the periphery of an interlayer film which are generated in a production process of laminated glass, an interlayer film for laminated glass obtained by separating and removing glass plates from a defective product of laminated glass generated in a production process of laminated glass, an interlayer film for laminated glass obtained by separating and removing glass plates from laminated glass obtained by disassembling a used vehicle and a decrepit building.

Hereinafter, the present invention will be elucidated by describing specific embodiments and examples of the present invention with reference to the drawings.

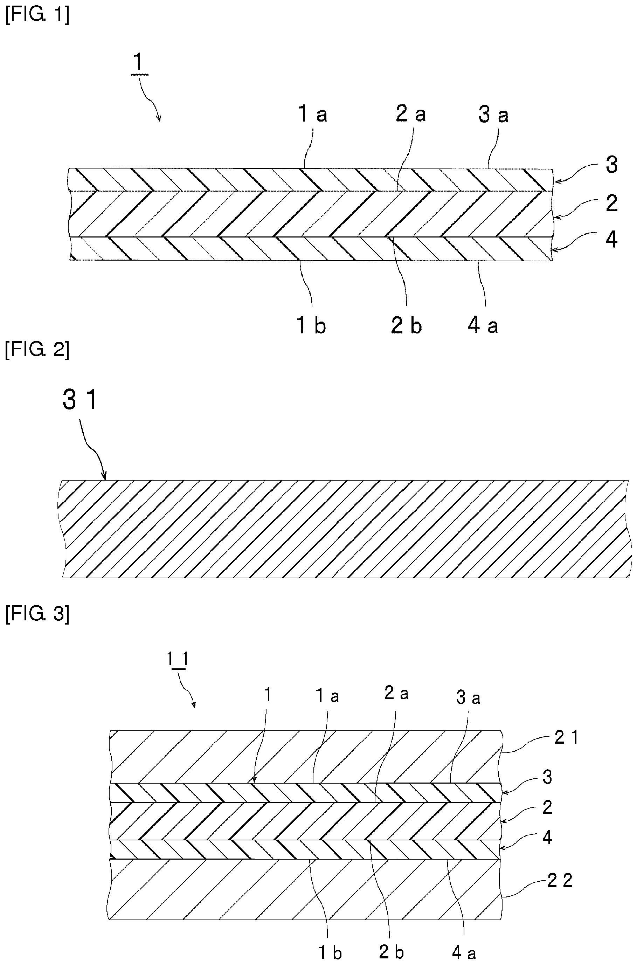

Fig. 1 shows a multi-layered interlayer film including an interlayer film for laminated glass in accordance with the first embodiment of the present invention schematically represented as a partially cut-away sectional view.

The interlayer film 1 shown in Fig. 1 is a multi-layered interlayer film having a two or more-layer structure (layered structure). The interlayer film 1 is used for obtaining laminated glass. The interlayer film 1 is an interlayer film for laminated glass. The interlayer film 1 is provided with a first layer 2, a second layer 3 arranged on a first surface 2a side of the first layer 2, and a third layer 4 arranged on a second surface 2b side opposite to the first surface 2a of the first layer 2. The second layer 3 is layered on the first surface 2a of the first layer 2. The third layer 4 is layered on the second surface 2b of the first layer 2. The first layer 2 is an intermediate layer. For example, the second layer 3 and the third layer 4 are protective layers and are surface layers in the present embodiment. The first layer 2 is arranged between the second layer 3 and the third layer 4 to be sandwiched. Accordingly, the interlayer film 1 has a multilayer structure in which the second layer 3, the first layer 2 and the third layer 4 are layered in this order.

It is preferred that the surface 3a at a side opposite to the first layer 2 side of the second layer 3 be a surface on which a laminated glass member is layered. It is preferred that the surface 4a at a side opposite to the first layer 2 side of the third layer 4 be a surface on which a laminated glass member is layered.

In this connection, other layers may be arranged between the first layer 2 and the second layer 3 and between the first layer 2 and the third layer 4, respectively. It is preferred that each of the second layer 3 and the third layer 4 be directly layered on the first layer 2. Examples of the other layers include a layer containing a thermoplastic resin such as a polyvinyl acetal resin and a layer containing polyethylene terephthalate.

From the viewpoint of further enhancing the penetration resistance of laminated glass prepared with the interlayer film, the first layer 2 contains a polyvinyl acetal resin and a plasticizer, and the second layer 3 contains a polyvinyl acetal resin and a plasticizer, and it is preferred that the third layer 4 contain at least one kind of a thermoplastic resin and it is more preferred that the third layer 4 contain a polyvinyl acetal resin and a plasticizer.

In the multi-layered interlayer film 1 shown in Fig. 1, at least one layer among the first layer 2, the second layer 3 and the third layer 4 is an interlayer film (satisfying the above-mentioned ratio (η2/η1)) corresponding to the interlayer film according to the present invention. The first layer 2 may be an interlayer film (satisfying the above-mentioned ratio (η2/η1)) corresponding to the interlayer film according to the present invention, the second layer 3 may be an interlayer film (satisfying the above-mentioned ratio (η2/η1)) corresponding to the interlayer film according to the present invention, and the third layer 4 may be an interlayer film (satisfying the above-mentioned ratio (η2/η1)) corresponding to the interlayer film according to the present invention. In the case where the multi-layered interlayer film is a multi-layered interlayer film with a three-layer structure, it is preferred that the surface layer be an interlayer film (satisfying the above-mentioned ratio (η2/η1)) corresponding to the interlayer film according to the present invention. In this case, only one surface layer may be an interlayer film corresponding to the interlayer film according to the present invention, both surface layers may be interlayer films corresponding to the interlayer films according to the present invention, and it is preferred that both surface layers be interlayer films corresponding to the interlayer films according to the present invention. Even when the interlayer film according to the present invention is used as a surface layer (an interlayer film), it is possible to improve the transparency.

Fig. 2 shows an interlayer film for laminated glass in accordance with the second embodiment of the present invention schematically represented as a partially cut-away sectional view.

The interlayer film 31 shown in Fig. 2 is a single-layered interlayer film having a one-layer structure. The interlayer film 31 is a first layer. The interlayer film 31 is used for obtaining laminated glass. The interlayer film 31 is an interlayer film for laminated glass. The interlayer film 31 is an interlayer film (satisfying the above-mentioned ratio (η2/η1)) corresponding to the interlayer film according to the present invention.

The interlayer film according to the present invention, 1) like the interlayer film 31, may be used as a single-layered interlayer film for obtaining laminated glass, and 2) like the interlayer film 1, may be used together with other interlayer films as a multi-layered interlayer film for obtaining laminated glass.

In the interlayer film 1, each of the second layer 3 and the third layer 4 is layered on each of both faces of the first layer 2. In the multi-layered interlayer film, the second layer needs only to be arranged on the first surface side of the first layer. The second layer is arranged on the first surface side of the first layer, and the third layer does not need to be arranged on the second surface side of the first layer. In this context, the second layer is arranged on the first surface side of the first layer, and it is preferred that the third layer be arranged on the second surface side of the first layer. By allowing the third layer to be arranged on the second surface side of the first layer, the handling properties of the interlayer film and the penetration resistance of laminated glass are further enhanced. Furthermore, at the surfaces of both sides of the interlayer film, the adhesivity to a laminated glass member can be adjusted. In this connection, in the case where the third layer is absent, the adhesivity of an outer surface of the second layer of the interlayer film to a laminated glass member can be adjusted.

Hereinafter, the details of each ingredient included in the interlayer film for laminated glass according to the present invention will be described.

### (Thermoplastic resin)

The interlayer film includes a polyvinyl acetal resin as the first and second thermoplastic resins

From the viewpoint of further effectively improving the transparency, the content ratio of the hydroxyl group of the first thermoplastic resin is higher than the content ratio of the hydroxyl group of the second thermoplastic resin. From the viewpoints of reducing the environmental load and further effectively improving the transparency, the absolute value of the difference between the content ratio of the hydroxyl group of the first thermoplastic resin and the content ratio of the hydroxyl group of the second thermoplastic resin is greater than 4% by mole and preferably greater than or equal to 6% by mole. The absolute value of the difference between the content ratio of the hydroxyl group of the first thermoplastic resin and the content ratio of the hydroxyl group of the second thermoplastic resin is preferably less than or equal to 12% by mole, more preferably less than or equal to 10% by mole and further preferably less than or equal to 8.5% by mole.

Since it is easy to make the above-mentioned ratio (η2/η1) less than or equal to the above upper limit, the thermoplastic resin is a polyvinyl acetal resin.

For example, the polyvinyl acetal resin can be produced by acetalizing polyvinyl alcohol with an aldehyde. For example, the polyvinyl alcohol is obtained by saponifying polyvinyl acetate. The saponification degree of the polyvinyl alcohol generally lies within the range of 70 to 99.9% by mole.

The average polymerization degree of the polyvinyl alcohol is greater than or equal to 1500, further preferably greater than or equal to 1600, preferably less than or equal to 3000, more preferably less than or equal to 2700 and further preferably less than or equal to 2400. When the average polymerization degree is greater than or equal to the above lower limit, the penetration resistance of laminated glass is further enhanced. When the average polymerization degree is less than or equal to the above upper limit, the resin is easily formed into an interlayer film.

From the viewpoint of further enhancing the penetration resistance of laminated glass, the average polymerization degree of the polyvinyl alcohol is greater than or equal to 1500 and less than or equal to 3000.

The average polymerization degree of the polyvinyl alcohol is determined by a method in accordance with JIS K6726 "Testing methods for polyvinyl alcohol".

The number of carbon atoms of the acetal group contained in the polyvinyl acetal resin is not particularly limited. The aldehyde used at the time of producing the polyvinyl acetal resin is not particularly limited. It is preferred that the number of carbon atoms of the acetal group in the polyvinyl acetal resin lie within the range of 3 to 5, and it is more preferred that the number of carbon atoms be 3 or 4. When the number of carbon atoms of the acetal group in the polyvinyl acetal resin is greater than or equal to 3, the glass transition temperature of the interlayer film is sufficiently lowered.

The aldehyde is not particularly limited. In general, as the aldehyde, an aldehyde with 1 to 10 carbon atoms is suitably used. Examples of the aldehyde with 1 to 10 carbon atoms include formaldehyde, acetaldehyde, propionaldehyde, n-butyraldehyde, isobutyraldehyde, n-valeraldehyde, 2-ethylbutyraldehyde, n-hexylaldehyde, n-octylaldehyde, n-nonylaldehyde, n-decylaldehyde, and benzaldehyde. Of these, propionaldehyde, n-butyraldehyde, isobutyraldehyde, n-hexylaldehyde or n-valeraldehyde is preferred, propionaldehyde, n-butyraldehyde or isobutyraldehyde is more preferred, and n-butyraldehyde is further preferred. One kind of the aldehyde may be used alone, and two or more kinds thereof may be combinedly used.

The polyvinyl acetal resin included in the first thermoplastic resin is defined as a polyvinyl acetal resin (1) . The polyvinyl acetal resin included in the second thermoplastic resin is defined as a polyvinyl acetal resin (2).

The content ratio of the hydroxyl group (the amount of hydroxyl groups) of the polyvinyl acetal resin (1) is preferably greater than or equal to 25% by mole, more preferably greater than or equal to 26% by mole, still more preferably greater than or equal to 27% by mole, further preferably greater than or equal to 28% by mole, especially preferably greater than or equal to 30% by mole, preferably less than or equal to 35% by mole, more preferably less than or equal to 33% by mole, further preferably less than or equal to 32% by mole and especially preferably less than or equal to 31.5% by mole. When the content ratio of the hydroxyl group is greater than or equal to the above lower limit, the adhesive force of the interlayer film is moderately heightened and the penetration resistance of laminated glass is further enhanced. Moreover, when the content ratio of the hydroxyl group is less than or equal to the above upper limit, the flexibility of the interlayer film is enhanced and the handling of the interlayer film is facilitated.

The content ratio of the hydroxyl group of the polyvinyl acetal resin (2) is preferably greater than or equal to 13% by mole, more preferably greater than or equal to 18% by mole, further preferably greater than or equal to 20% by mole, especially preferably greater than or equal to 21% by mole, most preferably greater than or equal to 22% by mole, preferably less than or equal to 30% by mole, more preferably less than 28% by mole and further preferably less than or equal to 26% by mole. The content ratio of the hydroxyl group of the polyvinyl acetal resin (2) may be less than 25% by mole. When the content ratio of the hydroxyl group is greater than or equal to the above lower limit, the adhesive force of the interlayer film is moderately heightened. Moreover, when the content ratio of the hydroxyl group is less than or equal to the above upper limit, the flexibility of the interlayer film is enhanced and the handling of the interlayer film is facilitated.

From the viewpoint of further effectively improving the transparency, it is preferred that the content ratio of the hydroxyl group of the polyvinyl acetal resin (1) be higher than the content ratio of the hydroxyl group of the polyvinyl acetal resin (2). From the viewpoints of reducing the environmental load and further effectively improving the transparency, the absolute value of the difference between the content ratio of the hydroxyl group of the polyvinyl acetal resin (1) and the content ratio of the hydroxyl group of the polyvinyl acetal resin (2) is greater than 4% by mole and preferably greater than or equal to 6% by mole. The absolute value of the difference between the content ratio of the hydroxyl group of the polyvinyl acetal resin (1) and the content ratio of the hydroxyl group of the polyvinyl acetal resin (2) is preferably less than or equal to 12% by mole, more preferably less than or equal to 10% by mole and further preferably less than or equal to 8.5% by mole.

The content ratio of the hydroxyl group of the polyvinyl acetal resin is a molar fraction, represented in percentage, obtained by dividing the amount of ethylene groups to which the hydroxyl group is bonded by the total amount of ethylene groups in the main chain. For example, the amount of ethylene groups to which the hydroxyl group is bonded can be measured in accordance with JIS K6726 "Testing methods for polyvinyl alcohol" to be determined.

The acetylation degree (the amount of acetyl groups) of the polyvinyl acetal resin (1) is preferably greater than or equal to 0.1% by mole, more preferably greater than or equal to 0.4% by mole, preferably less than or equal to 20% by mole, more preferably less than or equal to 5% by mole, further preferably less than or equal to 2% by mole and especially preferably less than or equal to 1.5% by mole. When the acetylation degree is greater than or equal to the above lower limit, the compatibility between the polyvinyl acetal resin and a plasticizer is heightened. When the acetylation degree is less than or equal to the above upper limit, the mechanical strength of the interlayer film is further heightened.

The acetylation degree of the polyvinyl acetal resin (2) is preferably greater than or equal to 0.1% by mole, more preferably greater than or equal to 0.4% by mole, preferably less than or equal to 30% by mole, more preferably less than or equal to 25% by mole, further preferably less than or equal to 20% by mole, and especially preferably less than or equal to 15% by mole. When the acetylation degree is greater than or equal to the above lower limit, the compatibility between the polyvinyl acetal resin and a plasticizer is heightened. When the acetylation degree is less than or equal to the above upper limit, the moisture resistance of the interlayer film and laminated glass is enhanced.

The acetylation degree is a molar fraction, represented in percentage, obtained by dividing a value obtained by subtracting the amount of ethylene groups to which the acetal group is bonded and the amount of ethylene groups to which the hydroxyl group is bonded from the total amount of ethylene groups in the main chain by the total amount of ethylene groups in the main chain. For example, the amount of ethylene groups to which the acetal group is bonded can be measured in accordance with JIS K6728 "Testing methods for polyvinyl butyral".

The acetalization degree of the polyvinyl acetal resin (1) (the butyralization degree in the case of a polyvinyl butyral resin) is preferably greater than or equal to 55% by mole, more preferably greater than or equal to 60% by mole, further preferably greater than or equal to 65% by mole, especially preferably greater than or equal to 67% by mole, preferably less than or equal to 80% by mole, more preferably less than or equal to 78% by mole, further preferably less than or equal to 76% by mole, especially preferably less than or equal to 71% by mole and most preferably less than or equal to 69% by mole. When the acetalization degree is greater than or equal to the above lower limit, the compatibility between the polyvinyl acetal resin and a plasticizer is heightened. When the acetalization degree is less than or equal to the above upper limit, the reaction time required for producing the polyvinyl acetal resin is shortened.

The acetalization degree of the polyvinyl acetal resin (2) (the butyralization degree in the case of a polyvinyl butyral resin) is preferably greater than or equal to 50% by mole, more preferably greater than or equal to 53% by mole, further preferably greater than or equal to 60% by mole, especially preferably greater than or equal to 63% by mole, preferably less than or equal to 85% by mole, more preferably less than or equal to 80% by mole and further preferably less than or equal to 78% by mole. When the acetalization degree is greater than or equal to the above lower limit, the compatibility between the polyvinyl acetal resin and a plasticizer is heightened. When the acetalization degree is less than or equal to the above upper limit, the reaction time required for producing the polyvinyl acetal resin is shortened.

The acetalization degree is a value expressing the mole fraction determined by dividing the amount of ethylene groups to which the acetal group is bonded by the total amount of ethylene groups in the main chain in terms of percentage. The acetalization degree can be calculated by a method in accordance with JIS K6728 "Testing methods for polyvinyl butyral".

In this connection, it is preferred that the content ratio of the hydroxyl group (the amount of hydroxyl groups), the acetalization degree (the butyralization degree) and the acetylation degree be calculated from the results measured by a method in accordance with JIS K6728 "Testing methods for polyvinyl butyral". In this context, a method in accordance with ASTM D1396-92 may be used. In the case where the polyvinyl acetal resin is a polyvinyl butyral resin, the content ratio of the hydroxyl group (the amount of hydroxyl groups), the acetalization degree (the butyralization degree) and the acetylation degree can be calculated from the results measured by a method in accordance with JIS K6728 "Testing methods for polyvinyl butyral".

Since the penetration resistance of laminated glass is further enhanced, it is preferred that the polyvinyl acetal resin (2) be a polyvinyl acetal resin (2A) with an acetylation degree (2a) less than or equal to 8% by mole and an acetalization degree (2a) greater than or equal to 67% by mole or a polyvinyl acetal resin (2B) with an acetylation degree (2b) greater than 8% by mole. The polyvinyl acetal resin (2) may be the polyvinyl acetal resin (2A), and may be the polyvinyl acetal resin (2B) .

The acetylation degree (2a) of the polyvinyl acetal resin (2A) is less than or equal to 8% by mole, preferably less than or equal to 7.8% by mole, more preferably less than or equal to 7.5% by mole, further preferably less than or equal to 7% by mole, especially preferably less than or equal to 6.5% by mole, most preferably less than or equal to 5% by mole, preferably greater than or equal to 0.1% by mole, more preferably greater than or equal to 0.5% by mole, further preferably greater than or equal to 0.8% by mole and especially preferably greater than or equal to 1% by mole. When the acetylation degree (2a) is less than or equal to the above upper limit and greater than or equal to the above lower limit, the transfer of a plasticizer can be easily controlled and the sound insulating properties of laminated glass are further heightened.

The acetalization degree (2a) of the polyvinyl acetal resin (2A) is greater than or equal to 67% by mole, preferably greater than or equal to 70% by mole, more preferably greater than or equal to 70.5% by mole, further preferably greater than or equal to 71% by mole, especially preferably greater than or equal to 71.5% by mole, most preferably greater than or equal to 72% by mole, preferably less than or equal to 85% by mole, more preferably less than or equal to 83% by mole, further preferably less than or equal to 81% by mole and especially preferably less than or equal to 79% by mole. When the acetalization degree (2a) is greater than or equal to the above lower limit, the sound insulating properties of laminated glass are further heightened. When the acetalization degree (2a) is less than or equal to the above upper limit, the reaction time required for producing the polyvinyl acetal resin (2A) can be shortened.

The content ratio (2a) of the hydroxyl group of the polyvinyl acetal resin (2A) is preferably greater than or equal to 18% by mole, more preferably greater than or equal to 19% by mole, further preferably greater than or equal to 20% by mole, especially preferably greater than or equal to 21% by mole, most preferably greater than or equal to 22% by mole, preferably less than or equal to 31% by mole, more preferably less than or equal to 30% by mole, further preferably less than or equal to 29% by mole, especially preferably less than or equal to 28% by mole and most preferably less than 25% by mole. When the content ratio (2a) of the hydroxyl group is greater than or equal to the above lower limit, the adhesive force of the interlayer film is further heightened. When the content ratio (2a) of the hydroxyl group is less than or equal to the above upper limit, the sound insulating properties of laminated glass are further heightened.

The acetylation degree (2b) of the polyvinyl acetal resin (2B) is greater than 8% by mole, preferably greater than or equal to 9% by mole, more preferably greater than or equal to 9.5% by mole, further preferably greater than or equal to 10% by mole, especially preferably greater than or equal to 10.5% by mole, preferably less than or equal to 30% by mole, more preferably less than or equal to 28% by mole, further preferably less than or equal to 26% by mole, especially preferably less than or equal to 24% by mole, and most preferably less than or equal to 15% by mole. When the acetylation degree (2b) is greater than or equal to the above lower limit, the sound insulating properties of laminated glass are further heightened. When the acetylation degree (2b) is less than or equal to the above upper limit, the reaction time required for producing the polyvinyl acetal resin (2B) can be shortened.

The acetalization degree (2b) of the polyvinyl acetal resin (2B) is preferably greater than or equal to 50% by mole, more preferably greater than or equal to 53% by mole, further preferably greater than or equal to 55% by mole, especially preferably greater than or equal to 60% by mole, preferably less than or equal to 80% by mole, more preferably less than or equal to 78% by mole, further preferably less than or equal to 76% by mole, especially preferably less than or equal to 74% by mole, and most preferably less than or equal to 67% by mole. When the acetalization degree (2b) is greater than or equal to the above lower limit, the sound insulating properties of laminated glass are further heightened. When the acetalization degree (2b) is less than or equal to the above upper limit, the reaction time required for producing the polyvinyl acetal resin (2B) can be shortened.

The content ratio (2b) of the hydroxyl group of the polyvinyl acetal resin (2B) is preferably greater than or equal to 18% by mole, more preferably greater than or equal to 19% by mole, further preferably greater than or equal to 20% by mole, especially preferably greater than or equal to 21% by mole, most preferably greater than or equal to 22% by mole, preferably less than or equal to 31% by mole, more preferably less than or equal to 30% by mole, further preferably less than or equal to 29% by mole, especially preferably less than or equal to 28% by mole and most preferably less than 25% by mole. When the content ratio (2b) of the hydroxyl group is greater than or equal to the above lower limit, the adhesive force of the interlayer film is further heightened. When the content ratio (2b) of the hydroxyl group is less than or equal to the above upper limit, the sound insulating properties of laminated glass are further heightened.

It is preferred that each of the polyvinyl acetal resin (2A) and the polyvinyl acetal resin (2B) be a polyvinyl butyral resin.

In 100% by weight of the polyvinyl acetal resin included in the interlayer film, the content of a polyvinyl acetal resin with a content ratio of the hydroxyl group less than 25% by mole is preferably greater than or equal to 0.1% by weight, more preferably greater than or equal to 0.5% by weight, further preferably greater than or equal to 1% by weight, less than or equal to 4.5% by weight, more preferably less than or equal to 2.2% by weight, further preferably less than or equal to 1.5% by weight and especially preferably less than or equal to 1.3% by weight.

### (Plasticizer)

The interlayer film includes a plasticizer. One kind of the plasticizer may be used alone and two or more kinds thereof may be combinedly used.

Examples of the plasticizer include organic ester plasticizers such as a monobasic organic acid ester and a polybasic organic acid ester, organic phosphate plasticizers such as an organic phosphate plasticizer and an organic phosphite plasticizer. Of these, organic ester plasticizers are preferred. It is preferred that the plasticizer be a liquid plasticizer.

Examples of the monobasic organic acid ester include a glycol ester obtained by the reaction of a glycol with a monobasic organic acid. Examples of the glycol include triethylene glycol, tetraethylene glycol, and tripropylene glycol. Examples of the monobasic organic acid include butyric acid, isobutyric acid, caproic acid, 2-ethylbutyric acid, hepthylic acid, n-octylic acid, 2-ethylhexanoic acid, n-nonylic acid, and decylic acid.

Examples of the polybasic organic acid ester include an ester compound of a polybasic organic acid and an alcohol having a linear or branched structure of 4 to 8 carbon atoms. Examples of the polybasic organic acid include adipic acid, sebacic acid, and azelaic acid.

Examples of the organic ester plasticizer include triethylene glycol di-2-ethylpropanoate, triethylene glycol di-2-ethylbutyrate, triethylene glycol di-2-ethylhexanoate, triethylene glycol dicaprylate, triethylene glycol di-n-octanoate, triethylene glycol di-n-heptanoate, tetraethylene glycol di-n-heptanoate, dibutyl sebacate, dioctyl azelate, dibutyl carbitol adipate, ethylene glycol di-2-ethylbutyrate, 1,3-propylene glycol di-2-ethylbutyrate, 1,4-butylene glycol di-2-ethylbutyrate, diethylene glycol di-2-ethylbutyrate, diethylene glycol di-2-ethylhexanoate, dipropylene glycol di-2-ethylbutyrate, triethylene glycol di-2-ethylpentanoate, tetraethylene glycol di-2-ethylbutyrate, diethylene glycol dicaprylate, dihexyl adipate, dioctyl adipate, hexyl cyclohexyl adipate, a mixture of heptyl adipate and nonyl adipate, diisononyl adipate, diisodecyl adipate, heptyl nonyl adipate, dibutyl sebacate, oil-modified sebacic alkyd, a mixture of a phosphoric acid ester and an adipic acid ester. Organic ester plasticizers other than these may be used. Other c esters other than the above-described adipic acid esters may be used.

Examples of the organic phosphate plasticizer include tributoxyethyl phosphate, isodecyl phenyl phosphate, and triisopropyl phosphate.

It is preferred that the plasticizer be a diester plasticizer represented by the following formula (1).

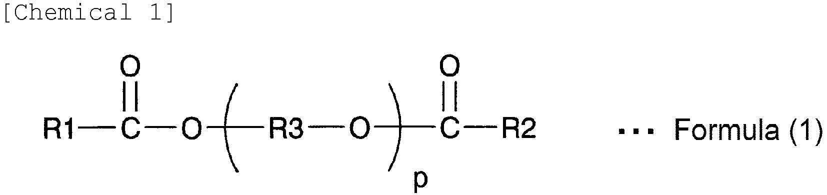

In the foregoing formula (1), R1 and R2 each represent an organic group with 2 to 10 carbon atoms, R3 represents an ethylene group, an isopropylene group or an n-propylene group, and p represents an integer of 3 to 10. It is preferred that R1 and R2 in the foregoing formula (1) each be an organic group with 5 to 10 carbon atoms, and it is more preferred that R1 and R2 each be an organic group with 6 to 10 carbon atoms.

It is preferred that the plasticizer include triethylene glycol di-2-ethylhexanoate (3GO), triethylene glycol di-2-ethylbutyrate (3GH) or triethylene glycol di-2-ethylpropanoate, it is more preferred that the plasticizer include triethylene glycol di-2-ethylhexanoate or triethylene glycol di-2-ethylbutyrate, and it is further preferred that the plasticizer include triethylene glycol di-2-ethylhexanoate.

Relative to 100 parts by weight of the thermoplastic resin included in the interlayer film, the content of the plasticizer included in the interlayer film is preferably greater than or equal to 30 parts by weight, more preferably greater than or equal to 35 parts by weight, further preferably greater than or equal to 38 parts by weight, preferably less than or equal to 45 parts by weight, and more preferably less than or equal to 40 parts by weight.

### (Other ingredients)

The above-mentioned interlayer film may include additives such as an oxidation inhibitor, an ultraviolet ray shielding agent, a light stabilizer, a flame retardant, an antistatic agent, a pigment, a dye, an adhesive force regulating agent, a moisture-resistance improving agent, a fluorescent brightening agent, and an infrared ray absorber, as necessary. One kind of these additives may be used alone, and two or more kinds thereof may be combinedly used.

### (Other details of interlayer film for laminated glass)

The thickness of the interlayer film according to the present invention is not particularly limited. From the viewpoint of the practical aspect, the thickness of the interlayer film is preferably greater than or equal to 0.1 mm, more preferably greater than or equal to 0.25 mm, preferably less than or equal to 3 mm, and more preferably less than or equal to 1.5 mm. When the thickness of the interlayer film is greater than or equal to the above lower limit, the penetration resistance of laminated glass is enhanced. When the thickness of the interlayer film is less than or equal to the above upper limit, the transparency of the interlayer film is further improved.

The production method of the interlayer film for laminated glass according to the present invention is not particularly limited. In the case of obtaining a single-layered interlayer film, examples of the production method of the interlayer film for laminated glass according to the present invention include a method of allowing a resin composition to be extruded using an extruder. In the case of allowing an interlayer film to be layered together with other interlayer films to obtain a multi-layered interlayer film, examples of the production method of the interlayer film for laminated glass according to the present invention include a method of separately forming respective resin compositions used for constituting respective layers into respective layers, and then, for example, allowing the respective obtained layers to be layered, a method of allowing respective resin compositions used for constituting respective layers to be coextruded using an extruder and allowing the respective layers to be layered. A production method of extrusion-molding is preferred because the method is suitable for continuous production.

### (Laminated glass)

Fig. 3 shows an example of laminated glass prepared with a multi-layered interlayer film including an interlayer film for laminated glass in accordance with the first embodiment of the present invention schematically represented as a sectional view.

The laminated glass 11 shown in Fig. 3 is provided with a first laminated glass member 21, a second laminated glass member 22 and an interlayer film 1. The interlayer film 1 is arranged between the first laminated glass member 21 and the second laminated glass member 22 to be sandwiched.

The first laminated glass member 21 is layered on a first surface 1a of the interlayer film 1. The second laminated glass member 22 is layered on a second surface 1b opposite to the first surface 1a of the interlayer film 1. The first laminated glass member 21 is layered on an outer surface 3a of the second layer 3 of the interlayer film 1. The second laminated glass member 22 is layered on an outer surface 4a of the third layer 4 of the interlayer film 1. The interlayer film 31 may be used in place of the interlayer film 1.

As described above, the laminated glass according to the present invention is provided with a first laminated glass member, a second laminated glass member and an interlayer film arranged between the first laminated glass member and the second laminated glass member, and the interlayer film includes the interlayer film for laminated glass according to the present invention. The interlayer film for laminated glass according to the present invention may be arranged alone between the first laminated glass member and the second laminated glass member, and may be arranged together with other interlayer films between the first laminated glass member and the second laminated glass member.

Examples of the laminated glass member include a glass plate and a PET (polyethylene terephthalate) film. As the laminated glass, laminated glass in which an interlayer film is sandwiched between a glass plate and a PET film, as well as laminated glass in which an interlayer film is sandwiched between two glass plates, is included. The laminated glass is a laminate provided with a glass plate, and it is preferred that at least one glass plate be used. It is preferred that the first laminated glass member and the second laminated glass member be each a glass plate or a PET film and at least one among the first laminated glass member and the second laminated glass member be a glass plate.

Examples of the glass plate include a sheet of inorganic glass and a sheet of organic glass. Examples of the inorganic glass include float plate glass, heat ray-absorbing plate glass, heat ray-reflecting plate glass, polished plate glass, figured glass, and wired plate glass. The organic glass is synthetic resin glass substituted for inorganic glass. Examples of the organic glass include a polycarbonate plate, and a poly(meth)acrylic resin plate. Examples of the poly(meth)acrylic resin plate include a polymethyl (meth)acrylate plate.

The thickness of the laminated glass member is preferably greater than or equal to 1 mm, preferably less than or equal to 5 mm, and more preferably less than or equal to 3 mm. Moreover, in the case where the laminated glass member is a glass plate, the thickness of the glass plate is preferably greater than or equal to 1 mm, preferably less than or equal to 5 mm, and more preferably less than or equal to 3 mm. In the case where the laminated glass member is a PET film, the thickness of the PET film is preferably greater than or equal to 0.03 mm and preferably less than or equal to 0.5 mm.

The production method of the laminated glass is not particularly limited. For example, an interlayer film is sandwiched between the first laminated glass member and the second laminated glass member, and the air remaining between each of the first laminated glass member and the second laminated glass member and the interlayer film is removed by allowing the members to pass through a pressing roll or by putting the members into a rubber bag and allowing the contents to be sucked under reduced pressure. Afterward, the members are preliminarily bonded together at about 70 to 110°C to obtain a laminate. Next, by putting the laminate into an autoclave or by pressing the laminate, the members are press-bonded together at about 120 to 150°C and under a pressure of 1 to 1.5 MPa. In this way, laminated glass can be obtained.

The interlayer film and the laminated glass can be used for automobiles, railway vehicles, aircraft, ships, and buildings . The interlayer film and the laminated glass can also be used for applications other than these applications. It is preferred that the interlayer film and the laminated glass be an interlayer film and laminated glass for vehicles or for building, and it is more preferred that the interlayer film and the laminated glass be an interlayer film and laminated glass for vehicles. The interlayer film and the laminated glass can be used for a windshield, side glass, and rear glass or roof glass of an automobile. The interlayer film and the laminated glass are suitably used for automobiles.

Hereinafter, the present invention will be described in more detail with reference to examples.

The following materials were used.

### (Thermoplastic resin)

PVB (1) (n-butyraldehyde was used, the average polymerization degree of PVA of 3000, the content ratio of the hydroxyl group of 23.0% by mole, the acetylation degree of 12.5% by mole, the acetalization degree (the butyralization degree) of 64.5% by mole)

PVB (2) (n-butyraldehyde was used, the average polymerization degree of PVA of 2300, the content ratio of the hydroxyl group of 23.0% by mole, the acetylation degree of 12.5% by mole, the acetalization degree (the butyralization degree) of 64.5% by mole)

PVB (3) (n-butyraldehyde was used, the average polymerization degree of PVA of 1700, the content ratio of the hydroxyl group of 23.0% by mole, the acetylation degree of 12.5% by mole, the acetalization degree (the butyralization degree) of 64.5% by mole)

PVB (4) (n-butyraldehyde was used, the average polymerization degree of PVA of 1700, the content ratio of the hydroxyl group of 30.4% by mole, the acetylation degree of 0.8% by mole, the acetalization degree (the butyralization degree) of 68.8% by mole)

### Synthetic method of PVB (4):

In a reactor equipped with a stirring apparatus, 2650 ml of ion-exchanged water and 300 g of polyvinyl alcohol with a polymerization degree of 1700 and a saponification degree of 99.1 were placed, and the polyvinyl alcohol was heated and dissolved with stirring to obtain a solution. Next, to this solution, 35% by weight hydrochloric acid in an amount of 0.2% by weight relative to the whole system as a catalyst was added, the temperature of the solution was adjusted to 10°C, and then, 23.7 g of n-butyraldehyde as an aldehyde was added with stirring. Afterward, 142 g of n-butyraldehyde was added, whereupon a resin in a white particulate form precipitated. At the end of 15 minutes after the precipitation, 35% by weight hydrochloric acid in an amount of 1.8% by weight relative to the whole system was added, the temperature was elevated to 60°C and the contents were aged for 2 hours at 63°C. Afterward, the contents were cooled and subjected to neutralization, water washing and drying to obtain PVB (4).

PVB (5) (n-butyraldehyde was used, the average polymerization degree of PVA of 1700, the content ratio of the hydroxyl group of 30.4% by mole, the acetylation degree of 0.8% by mole, the acetalization degree (the butyralization degree) of 68.8% by mole)

### Synthetic method of PVB (5):

In a reactor equipped with a stirring apparatus, 2640 ml of ion-exchanged water and 300 g of polyvinyl alcohol with a polymerization degree of 1700 and a saponification degree of 99.1 were placed, and the polyvinyl alcohol was heated and dissolved with stirring to obtain a solution. Next, to this solution, 35% by weight hydrochloric acid in an amount of 0.2% by weight relative to the whole system as a catalyst was added, the temperature of the solution was adjusted to 10°C, and then, 23.7 g of n-butyraldehyde as an aldehyde was added with stirring. Afterward, 118 g of n-butyraldehyde was added, whereupon a resin in a white particulate form precipitated. At the end of 15 minutes after the precipitation, 35% by weight hydrochloric acid in an amount of 1.8% by weight relative to the whole system was added, the temperature was elevated to 60°C and the contents were aged for 2 hours at 63°C. Afterward, 28.4 g of n-butyraldehyde was added during cooling, and then, the contents were subjected to neutralization, water washing and drying to obtain PVB (5).

Moreover, the addition amount of n-butyraldehyde added was adjusted to obtain PVB (51) and PVB (52) as in the case of the PVB (5).

PVB (51) (n-butyraldehyde was used, the average polymerization degree of PVA of 1700, the content ratio of the hydroxyl group of 29.7% by mole, the acetylation degree of 0.8% by mole, the acetalization degree (the butyralization degree) of 69.5% by mole)

PVB (52) (n-butyraldehyde was used, the average polymerization degree of PVA of 1700, the content ratio of the hydroxyl group of 31.7% by mole, the acetylation degree of 0.8% by mole, the acetalization degree (the butyralization degree) of 67.5% by mole)

PVB (6) (n-butyraldehyde was used, the average polymerization degree of PVA of 1380, the content ratio of the hydroxyl group of 30.4% by mole, the acetylation degree of 0.8% by mole, the acetalization degree (the butyralization degree) of 68.8% by mole)

### Synthetic method of PVB (6)

PVB (6) was obtained in the same manner as that for the PVB (4) except that the polymerization degree of polyvinyl alcohol was changed to 1380.

With regard to the polyvinyl butyral (PVB) resin, the butyralization degree (the acetalization degree), the acetylation degree and the content ratio of the hydroxyl group were measured by a method in accordance with JIS K6728 "Testing methods for polyvinyl butyral". In this connection, even in the cases of being measured according to ASTM D1396-92, numerical values similar to those obtained by a method in accordance with JIS K6728 "Testing methods for polyvinyl butyral" were exhibited.

PVB (7) (n-butyraldehyde was used, the average polymerization degree of PVA of 2000, the content ratio of the hydroxyl group of 23.0% by mole, the acetylation degree of 12.5% by mole, the acetalization degree (the butyralization degree) of 64.5% by mole)

PVB (8) (n-butyraldehyde was used, the average polymerization degree of PVA of 3000, the content ratio of the hydroxyl group of 22.5% by mole, the acetylation degree of 0.9% by mole, the acetalization degree (the butyralization degree) of 76.6% by mole)

PVB (81) (n-butyraldehyde was used, the average polymerization degree of PVA of 2300, the content ratio of the hydroxyl group of 22.5% by mole, the acetylation degree of 0.9% by mole, the acetalization degree (the butyralization degree) of 76.6% by mole)

PVB (82) (n-butyraldehyde was used, the average polymerization degree of PVA of 1700, the content ratio of the hydroxyl group of 22.5% by mole, the acetylation degree of 0.9% by mole, the acetalization degree (the butyralization degree) of 76.6% by mole)

PVB (9) (n-butyraldehyde was used, the average polymerization degree of PVA of 1500, the content ratio of the hydroxyl group of 30.4% by mole, the acetylation degree of 0.8% by mole, the acetalization degree (the butyralization degree) of 68.8% by mole)

PVB (10) (n-butyraldehyde was used, the average polymerization degree of PVA of 1000, the content ratio of the hydroxyl group of 30.4% by mole, the acetylation degree of 0.8% by mole, the acetalization degree (the butyralization degree) of 68.8% by mole)

PVB (11) (n-butyraldehyde was used, the average polymerization degree of PVA of 3000, the content ratio of the hydroxyl group of 22.4% by mole, the acetylation degree of 7.6% by mole, the acetalization degree (the butyralization degree) of 70% by mole)

PVB (12) (n-butyraldehyde was used, the average polymerization degree of PVA of 2300, the content ratio of the hydroxyl group of 22.4% by mole, the acetylation degree of 7.6% by mole, the acetalization degree (the butyralization degree) of 70% by mole)

PVB (13) (n-butyraldehyde was used, the average polymerization degree of PVA of 1700, the content ratio of the hydroxyl group of 22.4% by mole, the acetylation degree of 7.6% by mole, the acetalization degree (the butyralization degree) of 70% by mole)

### (Plasticizer)

3GO (triethylene glycol di-2-ethylhexanoate)

### Other ingredients:

T-326 (an ultraviolet ray shielding agent, 2-(2'-hydroxy-3'-t-butyl-5-methylphenyl)-5-chlorobenzotriaz ole, "Tinuvin 326" available from BASF Japan Ltd.)

BHT (an oxidation inhibitor, 2,6-di-t-butyl-p-cresol)

### (Example 1)

### Preparation of interlayer film:

One hundred parts by weight of PVB (1), 60 parts by weight of a plasticizer (3GO), 0.2 parts by weight of an ultraviolet ray shielding agent (Tinuvin 326) and 0.2 parts by weight of an oxidation inhibitor (BHT) were mixed to obtain a second composition.

One hundred parts by weight of PVB (4), 40 parts by weight of a plasticizer (3GO), 0.2 parts by weight of an ultraviolet ray shielding agent (Tinuvin 326) and 0.2 parts by weight of an oxidation inhibitor (BHT) were mixed to obtain a first composition.

One hundred parts by weight of the first composition and 1.5 parts by weight of the second composition were fed into an extruder to be mixed, and by allowing the mixture to be extruded using the extruder, an interlayer film (800 µm in thickness) was obtained.

### Preparation of laminated glass:

The interlayer film obtained was cut into a size of 80 mm in longitudinal length by 80 mm in transversal length. Next, the interlayer film was sandwiched between two sheets of transparent float glass (80 mm in longitudinal length by 80 mm in transversal length by 2.5 mm in thickness), held in place for 30 minutes at 90°C and pressed under vacuum with a vacuum laminator to obtain a laminate. With regard to the laminate, interlayer film portions protruded from the sheet of glass were cut away to obtain a sheet of laminated glass.

### (Examples 2 to 16 and Comparative Examples 1, 2)

An interlayer film and a sheet of laminated glass were prepared in the same manner as that in Example 1 except that the kind and content of the polyvinyl acetal resin and the kind and content of the plasticizer were set to those listed in the following Tables 1 and 2, and furthermore, the blending ratio of the first composition and the second composition was set in the following way. In this connection, the kinds of ingredients other than the polyvinyl acetal resin and the plasticizer and the blending amounts thereof are the same as those in Example 1. That is, in each of the second composition and the first composition, relative to 100 parts by weight of PVB, 0.2 parts by weight of an ultraviolet ray shielding agent (Tinuvin 326) and 0.2 parts by weight of an oxidation inhibitor (BHT) were used.

Example 2: One hundred parts by weight of a first composition and 2.4 parts by weight of a second composition were fed into an extruder to be mixed, and by allowing the mixture to be extruded using the extruder, an interlayer film (800 µm in thickness) was obtained.

Example 3: One hundred parts by weight of a first composition and 2.1 parts by weight of a second composition were fed into an extruder to be mixed, and by allowing the mixture to be extruded using the extruder, an interlayer film (800 µm in thickness) was obtained.

Example 4: One hundred parts by weight of a first composition and 3.9 parts by weight of a second composition were fed into an extruder to be mixed, and by allowing the mixture to be extruded using the extruder, an interlayer film (800 µm in thickness) was obtained.

Comparative Example 1: One hundred parts by weight of a first composition and 1.2 parts by weight of a second composition were fed into an extruder to be mixed, and by allowing the mixture to be extruded using the extruder, an interlayer film (800 µm in thickness) was obtained.

Examples 5 to 16 and Comparative Example 2: One hundred parts by weight of a first composition and 1.5 parts by weight of a second composition were fed into an extruder to be mixed, and by allowing the mixture to be extruded using the extruder, an interlayer film (800 µm in thickness) was obtained.

### (Evaluation)

### (1) Complex viscosity

The complex viscosities of the first and second thermoplastic resins were measured according to the following procedure. In a molding flask (2 cm in longitudinal length by 2 cm in transversal length by 0.76 mm in thickness) arranged between two sheets of polyethylene terephthalate (PET) films, 1 g of the first composition was placed, preheated for 10 minutes at a temperature of 150°C and under a pressure of 0 kg/cm², and then, press-molded for 15 minutes under a pressure of 80 kg/cm². Afterward, in a hand press machine previously set to 20°C, the press-molded first composition was installed and pressed for 10 minutes at 10 MPa to be cooled. Then, from the molding flask arranged between the two sheets of PET films, one sheet of the PET film was peeled off, and the press-molded product was stored for 24 hours in a constant-temperature and constant-humidity chamber (the humidity of 30% (±3%), the temperature of 23°C), and then, measured for the viscoelasticity, using the ARES-G2 available from TA Instruments Japan Inc., in accordance with JIS K 7244-10 (ISO 6721-10) to measure the complex viscosity. As a jig used at the time of the viscoelasticity measurement, a parallel plate with a diameter of 8 mm was used. Moreover, the viscoelasticity measurement was performed under conditions of a frequency of 1 Hz and a strain of 8% at the measurement temperature of 200°C. The obtained complex viscosity was read as a value of the complex viscosity of the first composition at 200°C. Moreover, the complex viscosity of the second composition was measured in the same manner. Moreover, the measurement was performed under a nitrogen atmosphere.

### (2) Transparency

Using a goniophotometer ("GONIOPHOTOMETER GP-200" available from MURAKAMI COLOR RESEARCH LABORATORY), the laminated glass obtained was measured for the scattered light intensity value under the condition of the Detector angle of 30°, the High Volt of 900, and the Sensitivity of 900. The lower the scattered light intensity value is, the smaller degree of haze the laminated glass has and the more excellent in transparency the laminated glass is. On the basis of the scattered light intensity, the transparency was evaluated according to the following criteria.

### [Criteria for judgment in transparency]

○○: The scattered light intensity is less than or equal to 50
○: The scattered light intensity is greater than 50 and less than or equal to 90
Δ: The scattered light intensity is greater than 90 and less than or equal to 110
×: The scattered light intensity is greater than 110

The details and the results are shown in the following Tables 1 and 2. In this connection, in the following Tables 1 and 2, with regard to the kinds of ingredients other than the polyvinyl acetal resin and the plasticizer and the blending amounts thereof, the description therefor was omitted.

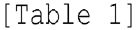

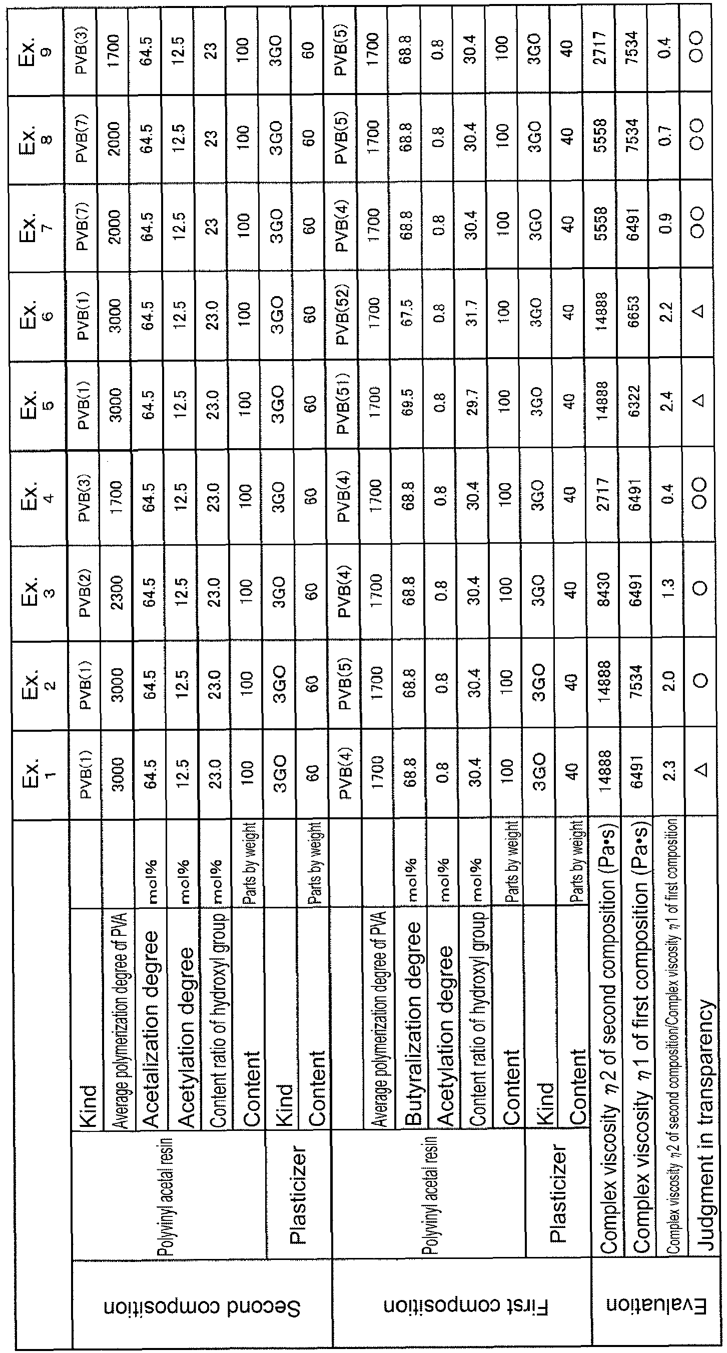

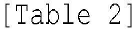

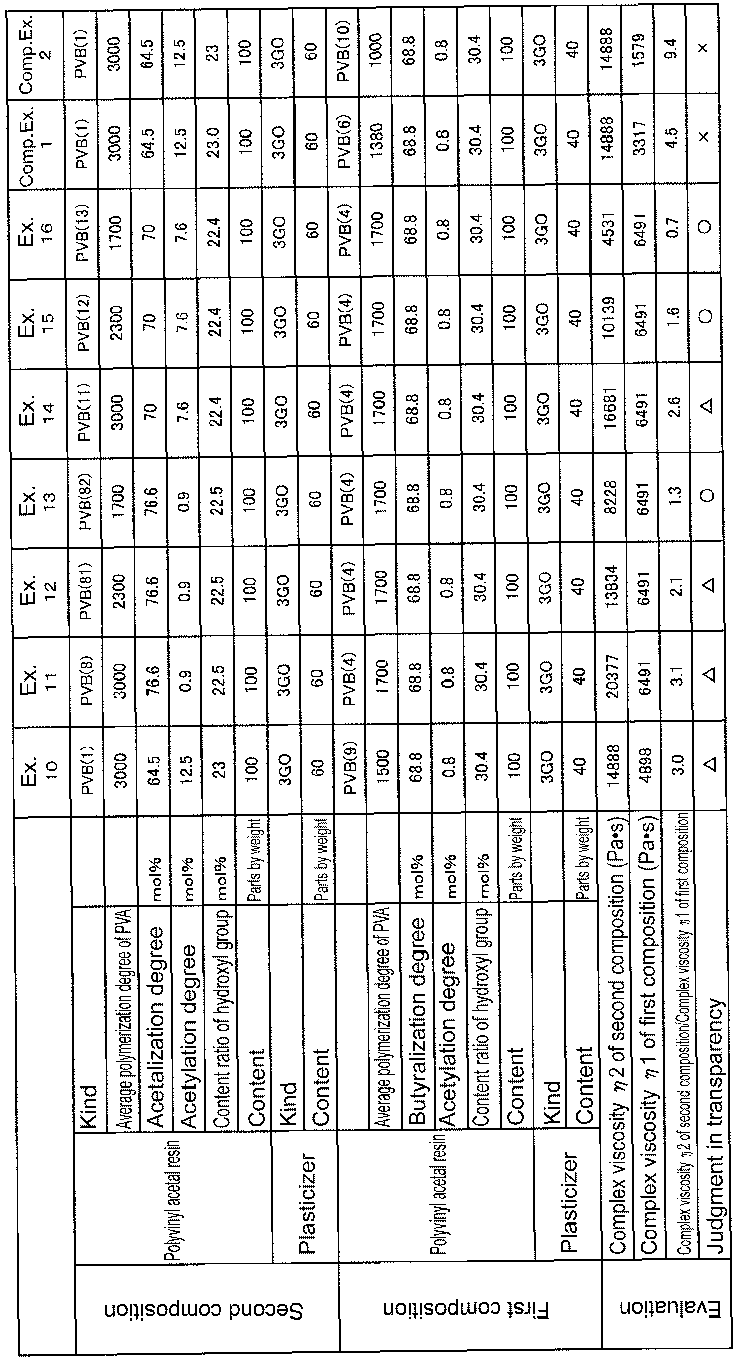

### EXPLANATION OF SYMBOLS

- 1:: Interlayer film (Multi-layered interlayer film)
- 1a:: First surface
- 1b:: Second surface
- 2:: First layer (Interlayer film)
- 2a:: First surface
- 2b:: Second surface
- 3:: Second layer (Interlayer film)
- 3a:: Outer surface
- 4:: Third layer (Interlayer film)
- 4a:: Outer surface
- 11:: Laminated glass
- 21:: First laminated glass member
- 22:: Second laminated glass member
- 31:: Interlayer film (Single-layered interlayer film)

## Claims

1. An interlayer film for laminated glass suitable to be arranged between a first lamination glass member and a second lamination glass member to obtain a laminated glass, the interlayer film being obtained by mixing a first composition containing a first thermoplastic resin having a hydroxyl group and a plasticizer and a second composition containing a second thermoplastic resin having a hydroxyl group and a plasticizer;
wherein the first thermoplastic resin is a polyvinyl acetal resin, which is obtained by acetalizing polyvinyl alcohol having an average polymerization degree of greater than or equal to 1500, and the second thermoplastic resin is a polyvinyl acetal resin,
the content ratio of the hydroxyl group of the first thermoplastic resin is higher by 4% by mole or more than the content ratio of the hydroxyl group of the second thermoplastic resin, and
the content of a polyvinyl acetal resin with a content ratio of the hydroxyl group less than 25% by mole is less than or equal to 4.5% by weight in 100% by weight of polyvinyl acetal resins included in the interlayer film,
the ratio of the complex viscosity at 200°C of the second composition to the complex viscosity at 200°C of the first composition is less than 4.5 or the first thermoplastic resin and the second thermoplastic resin is a first thermoplastic resin and a second thermoplastic resin which satisfy the ratio of the complex viscosity at 200°C of the second composition obtained by mixing 100 parts by weight of the second thermoplastic resin and 60 parts by weight of triethylene glycol di-2-ethylhexanoate to the complex viscosity at 200°C of the first composition obtained by mixing 100 parts by weight of the first thermoplastic resin and 40 parts by weight of triethylene glycol di-2-ethylhexanoate to be less than 4.5, respectively, and wherein the complex viscosity at 200 °C is measured according to the method in the description.

2. The interlayer film for laminated glass according to claim 1,
wherein the first thermoplastic resin and the second thermoplastic resin is a first thermoplastic resin and a second thermoplastic resin which satisfy the ratio of the complex viscosity at 200°C of the second composition obtained by mixing 100 parts by weight of the second thermoplastic resin and 60 parts by weight of triethylene glycol di-2-ethylhexanoate to the complex viscosity at 200°C of the first composition obtained by mixing 100 parts by weight of the first thermoplastic resin and 40 parts by weight of triethylene glycol di-2-ethylhexanoate to be less than 4.5, respectively, and wherein the complex viscosity at 200°C is measured according to the method in the description.

3. The interlayer film for laminated glass according to claim 1 or 2, wherein the complex viscosity at 200°C of the first composition is greater than or equal to 4000 Pa•s.

4. The interlayer film for laminated glass according to any one of claims 1 to 3, wherein the content ratio of the hydroxyl group of the first thermoplastic resin is greater than or equal to 25% by mole and the content ratio of the hydroxyl group of the second thermoplastic resin is less than 25% by mole.

5. A laminated glass, comprising a first laminated glass member, a second laminated glass member and an interlayer film for laminated glass according to any one of claims 1 to 4, wherein the interlayer film is arranged between the first laminated glass member and the second laminated glass member.

6. A method for producing an interlayer film for laminated glass suitable to be arranged between a first lamination glass member and a second lamination glass member to obtain a laminated glass, the method comprising the step of:
mixing a first composition containing a first thermoplastic resin having a hydroxyl group and a plasticizer and a second composition containing a second thermoplastic resin having a hydroxyl group and a plasticizer to obtain an interlayer film for laminated glass,
wherein the first thermoplastic resin is a polyvinyl acetal resin, which is obtained by acetalizing polyvinyl alcohol having an average polymerization degree of greater than or equal to 1500, and the second thermoplastic resin is a polyvinyl acetal resin,
the content ratio of the hydroxyl group of the first thermoplastic resin is higher by 4% by mole or more than the content ratio of the hydroxyl group of the second thermoplastic resin,
the content of a polyvinyl acetal resin with a content ratio of the hydroxyl group less than 25% by mole is less than or equal to 4.5% by weight in 100% by weight of polyvinyl acetal resins included in the interlayer film, and
the ratio of the complex viscosity at 200°C of the second composition to the complex viscosity at 200°C of the first composition is less than 4.5 or the first thermoplastic resin and the second thermoplastic resin is a first thermoplastic resin and a second thermoplastic resin which satisfy the ratio of the complex viscosity at 200°C of the second composition obtained by mixing 100 parts by weight of the second thermoplastic resin and 60 parts by weight of triethylene glycol di-2-ethylhexanoate to the complex viscosity at 200°C of the first composition obtained by mixing 100 parts by weight of the first thermoplastic resin and 40 parts by weight of triethylene glycol di-2-ethylhexanoate to be less than 4.5, respectively,
and wherein the complex viscosity at 200°C is measured according to the method in the description.

7. The method for producing the interlayer film for laminated glass according to claim 6,
wherein the first thermoplastic resin and the second thermoplastic resin is a first thermoplastic resin and a second thermoplastic resin which satisfy the ratio of the complex viscosity at 200°C of the second composition obtained by mixing 100 parts by weight of the second thermoplastic resin and 60 parts by weight of triethylene glycol di-2-ethylhexanoate to the complex viscosity at 200°C of the first composition obtained by mixing 100 parts by weight of the first thermoplastic resin and 40 parts by weight of triethylene glycol di-2-ethylhexanoate to be less than 4.5, respectively, and wherein the complex viscosity at 200°C is measured according to the method in the description.

8. The method for producing the interlayer film for laminated glass according to claim 6 or 7, wherein the complex viscosity at 200°C of the first composition is greater than or equal to 4000 Pa•s.

9. The method for producing the interlayer film for laminated glass according to any one of claims 6 to 8, wherein the content ratio of the hydroxyl group of the first thermoplastic resin is greater than or equal to 25% by mole and the content ratio of the hydroxyl group of the second thermoplastic resin is less than 25% by mole.

10. A method for producing a laminated glass comprising the step of:
obtaining an interlayer film for laminated glass by the method for producing an interlayer film for laminated glass according to any one of claims 6 to 9, and
arranging the interlayer film for laminated glass between a first laminated glass member and a second laminated glass member to obtain a laminated glass.

## Patentansprüche

1. Zwischenschichtfolie für Verbundglas, die geeignet ist, zwischen einem ersten Verbundglaselement und einem zweiten Verbundglaselement angeordnet zu werden, um ein Verbundglas zu erhalten, wobei die Zwischenschichtfolie durch Mischen einer ersten Zusammensetzung, die ein erstes thermoplastisches Harz, das eine Hydroxylgruppe aufweist, und einen Weichmacher enthält, und einer zweiten Zusammensetzung, die ein zweites thermoplastisches Harz, das eine Hydroxylgruppe aufweist, und einem Weichmacher enthält, erhalten wird;
wobei das erste thermoplastische Harz ein Polyvinylacetalharz ist, das durch Acetalisieren von Polyvinylalkohol, der einen durchschnittlichen Polymerisationsgrad von wenigstens 1500 aufweist, erhalten wird, und das zweite thermoplastische Harz ein Polyvinylacetalharz ist,
das Gehaltsverhältnis der Hydroxylgruppe des ersten thermoplastischen Harzes um wenigstens 4 Mol-% höher als das Gehaltsverhältnis der Hydroxylgruppe des zweiten thermoplastischen Harzes ist, und
der Gehalt eines Polyvinylacetalharzes mit einem Gehaltsverhältnis der Hydroxylgruppe von weniger als 25 Mol-% höchstens 4,5 Gew.-% in 100 Gew.-% der in der Zwischenschichtfolie eingeschlossenen Polyvinylacetalharze beträgt,
das Verhältnis der komplexen Viskosität bei 200 °C der zweiten Zusammensetzung zu der komplexen Viskosität bei 200 °C der ersten Zusammensetzung weniger als 4,5 beträgt oder das erste thermoplastische Harz und das zweite thermoplastische Harz ein erstes thermoplastisches Harz und ein zweites thermoplastisches Harz ist, die jeweils erfüllen, dass das Verhältnis der komplexen Viskosität bei 200 °C der zweiten Zusammensetzung, die durch Mischen von 100 Gewichtsteilen des zweiten thermoplastischen Harzes und 60 Gewichtsteilen Triethylenglykol-di-2-ethylhexanoat erhalten wird, zu der komplexen Viskosität bei 200 °C der ersten Zusammensetzung, die durch Mischen von 100 Gewichtsteilen des ersten thermoplastischen Harzes und 40 Gewichtsteilen Triethylenglykol-di-2-ethylhexanoat erhalten wird, weniger als 4,5 beträgt, und wobei die komplexe Viskosität bei 200 °C gemäß dem Verfahren in der Beschreibung gemessen wird.

2. Zwischenschichtfolie für Verbundglas nach Anspruch 1,
wobei das erste thermoplastische Harz und das zweite thermoplastische Harz ein erstes thermoplastisches Harz und ein zweites thermoplastisches Harz sind, die jeweils erfüllen, dass das Verhältnis der komplexen Viskosität bei 200 °C der zweiten Zusammensetzung, die durch Mischen von 100 Gewichtsteilen des zweiten thermoplastischen Harzes und 60 Gewichtsteilen Triethylenglykol-di-2-ethylhexanoat erhalten wird, zu der komplexen Viskosität bei 200 °C der ersten Zusammensetzung, die durch Mischen von 100 Gewichtsteilen des ersten thermoplastischen Harzes und 40 Gewichtsteilen Triethylenglykol-di-2-ethylhexanoat erhalten wird, weniger als 4,5 beträgt, und wobei die komplexe Viskosität bei 200 °C gemäß dem Verfahren in der Beschreibung gemessen wird.

3. Zwischenschichtfolie für Verbundglas nach Anspruch 1 oder 2, wobei die komplexe Viskosität bei 200 °C der ersten Zusammensetzung wenigstens 4000 Pa•s beträgt.

4. Zwischenschichtfolie für Verbundglas nach einem der Ansprüche 1 bis 3, wobei das Gehaltsverhältnis der Hydroxylgruppe des ersten thermoplastischen Harzes wenigstens 25 Mol-% beträgt und das Gehaltsverhältnis der Hydroxylgruppe des zweiten thermoplastischen Harzes weniger als 25 Mol-% beträgt.

5. Verbundglas, das ein erstes Verbundglaselement, ein zweites Verbundglaselement und eine Zwischenschichtfolie für Verbundglas nach einem der Ansprüche 1 bis 4 umfasst, wobei die Zwischenschichtfolie zwischen dem ersten Verbundglaselement und dem zweiten Verbundglaselement angeordnet ist.

6. Verfahren zum Herstellen einer Zwischenschichtfolie für Verbundglas, die geeignet ist, zwischen einem ersten Verbundglaselement und einem zweiten Verbundglaselement angeordnet zu werden, um ein Verbundglas zu erhalten, wobei das Verfahren den Schritt umfasst:
Mischen einer ersten Zusammensetzung, die ein erstes thermoplastisches Harz, das eine Hydroxylgruppe aufweist, und einen Weichmacher enthält, und einer zweiten Zusammensetzung, die ein zweites thermoplastisches Harz, das eine Hydroxylgruppe aufweist, und einen Weichmacher enthält, um eine Zwischenschichtfolie für Verbundglas zu erhalten,
wobei das erste thermoplastische Harz ein Polyvinylacetalharz ist, das durch Acetalisieren von Polyvinylalkohol, der einen durchschnittlichen Polymerisationsgrad von wenigstens 1500 aufweist, erhalten wird, und das zweite thermoplastische Harz ein Polyvinylacetalharz ist,
das Gehaltsverhältnis der Hydroxylgruppe des ersten thermoplastischen Harzes um wenigstens 4 Mol-% höher als das Gehaltsverhältnis der Hydroxylgruppe des zweiten thermoplastischen Harzes ist,
der Gehalt eines Polyvinylacetalharzes mit einem Gehaltsverhältnis der Hydroxylgruppe von weniger als 25 Mol-% höchstens 4,5 Gew.-% in 100 Gew.-% der in der Zwischenschichtfolie eingeschlossenen Polyvinylacetalharze ist, und
das Verhältnis der komplexen Viskosität bei 200 °C der zweiten Zusammensetzung zu der komplexen Viskosität bei 200 °C der ersten Zusammensetzung weniger als 4,5 beträgt oder das erste thermoplastische Harz und das zweite thermoplastische Harz ein erstes thermoplastisches Harz und ein zweites thermoplastisches Harz ist, die jeweils erfüllen, dass das Verhältnis der komplexen Viskosität bei 200 °C der zweiten Zusammensetzung, die durch Mischen von 100 Gewichtsteilen des zweiten thermoplastischen Harzes und 60 Gewichtsteilen Triethylenglykol-di-2-ethylhexanoat erhalten wird, zu der komplexen Viskosität bei 200 °C der ersten Zusammensetzung, die durch Mischen von 100 Gewichtsteilen des ersten thermoplastischen Harzes und 40 Gewichtsteilen Triethylenglykol-di-2-ethylhexanoat erhalten wird, weniger als 4,5 beträgt,
und wobei die komplexe Viskosität bei 200 °C gemäß dem Verfahren in der Beschreibung gemessen wird.

7. Verfahren zum Herstellen der Zwischenschichtfolie für Verbundglas nach Anspruch 6,
wobei das erste thermoplastische Harz und das zweite thermoplastische Harz ein erstes thermoplastisches Harz und ein zweites thermoplastisches Harz sind, die jeweils erfüllen, dass das Verhältnis der komplexen Viskosität bei 200 °C der zweiten Zusammensetzung, die durch Mischen von 100 Gewichtsteilen des zweiten thermoplastischen Harzes und 60 Gewichtsteilen Triethylenglykol-di-2-ethylhexanoat erhalten wird, zu der komplexen Viskosität bei 200 °C der ersten Zusammensetzung, die durch Mischen von 100 Gewichtsteilen des ersten thermoplastischen Harzes und 40 Gewichtsteilen Triethylenglykol-di-2-ethylhexanoat erhalten wird, weniger als 4,5 beträgt, und wobei die komplexe Viskosität bei 200 °C gemäß dem Verfahren in der Beschreibung gemessen wird.

8. Verfahren zum Herstellen der Zwischenschichtfolie für Verbundglas nach Anspruch 6 oder 7, wobei die komplexe Viskosität bei 200 °C der ersten Zusammensetzung wenigstens 4000 Pa•s beträgt.

9. Verfahren zum Herstellen der Zwischenschichtfolie für Verbundglas nach einem der Ansprüche 6 bis 8, wobei das Gehaltsverhältnis der Hydroxylgruppe des ersten thermoplastischen Harzes wenigstens 25 Mol-% beträgt und das Gehaltsverhältnis der Hydroxylgruppe des zweiten thermoplastischen Harzes weniger als 25 Mol-% beträgt.

10. Verfahren zum Herstellen eines Verbundglases, das den Schritt umfasst:
Erhalten einer Zwischenschichtfolie für Verbundglas durch das Verfahren zum Herstellen einer Zwischenschichtfolie für Verbundglas nach einem der Ansprüche 6 bis 9, und
Anordnen der Zwischenschichtfolie für Verbundglas zwischen einem ersten Verbundglaselement und einem zweiten Verbundglaselement, um ein Verbundglas zu erhalten.

## Revendications

1. Film formant couche intermédiaire pour verre feuilleté apte à être disposé entre un premier élément de verre feuilleté et un second élément de verre feuilleté pour obtenir un verre feuilleté, le film formant couche intermédiaire étant obtenu par mixtion d'une première composition contenant une première résine thermoplastique possédant un groupe hydroxyle et un plastifiant et d'une seconde composition contenant une seconde résine thermoplastique possédant un groupe hydroxyle et un plastifiant ;
la première résine thermoplastique étant une résine poly(acétal de vinyle), laquelle est obtenue par acétalisation d'un alcool polyvinylique possédant un degré de polymérisation moyen supérieur ou égal à 1500, et la seconde résine thermoplastique étant une résine poly(acétal de vinyle),
le rapport de teneur en groupe hydroxyle de la première résine thermoplastique étant supérieur à raison de 4 % en mole ou plus au rapport de teneur en groupe hydroxyle de la seconde résine thermoplastique, et
la teneur en résine poly(acétal de vinyle) présentant un rapport de teneur en groupe hydroxyle inférieur à 25 % en mole étant inférieure ou égale à 4,5 % en poids dans 100 % en poids de résines poly(acétal de vinyle) comprises dans le film formant couche intermédiaire,
le rapport de la viscosité complexe à 200 °C de la seconde composition à la viscosité complexe à 200 °C de la première composition étant inférieur à 4,5 ou la première résine thermoplastique et la seconde résine thermoplastique étant une première résine thermoplastique et une seconde résine thermoplastique qui satisfont au rapport de viscosité complexe à 200 °C de la seconde composition obtenue par mixtion de 100 parties en poids de la seconde résine thermoplastique et de 60 parties en poids de di-2-éthylhexanoate de triéthylène glycol à la viscosité complexe à 200 °C de la première composition obtenue par mixtion de 100 parties en poids de la première résine thermoplastique et de 40 parties en poids de di-2-éthylhexanoate de triéthylène glycol devant être inférieures à 4,5, respectivement, et la viscosité complexe à 200 °C étant mesurée sur la base du procédé selon la description.

2. Film formant couche intermédiaire pour verre feuilleté selon la revendication 1,
la première résine thermoplastique et la seconde résine thermoplastique étant une première résine thermoplastique et une seconde résine thermoplastique qui satisfont au rapport de la viscosité complexe à 200 °C de la seconde composition obtenue par mixtion de 100 parties en poids de la seconde résine thermoplastique et de 60 parties en poids de di-2-éthylhexanoate de triéthylène glycol à la viscosité complexe à 200 °C de la première composition obtenue par mixtion de 100 parties en poids de la première résine thermoplastique et de 40 parties en poids de di-2-éthylhexanoate de triéthylène glycol devant être inférieures à 4,5, respectivement, et la viscosité complexe à 200 °C étant mesurée sur la base du procédé selon la description.

3. Film formant couche intermédiaire pour verre feuilleté selon la revendication 1 ou 2, la viscosité complexe à 200 °C de la première composition étant supérieure ou égale à 4 000 Pa•s.

4. Film formant couche intermédiaire pour verre feuilleté selon l'une quelconque des revendications 1 à 3, le rapport de teneur en groupe hydroxyle de la première résine thermoplastique étant supérieur ou égal à 25 % en mole et le rapport de teneur en groupe hydroxyle de la seconde résine thermoplastique étant inférieure à 25 % en mole.

5. Verre feuilleté, comprenant un premier élément de verre feuilleté, un second élément de verre feuilleté et un film formant couche intermédiaire pour verre feuilleté selon l'une quelconque des revendications 1 à 4, le film formant couche intermédiaire pour verre feuilleté étant disposé entre le premier élément de verre feuilleté et le second élément de verre feuilleté.

6. Procédé de production d'un film formant couche intermédiaire pour verre feuilleté apte à être disposé entre un premier élément de verre feuilleté et un second élément de verre feuilleté afin d'obtenir un verre feuilleté, le procédé comprenant l'étape consistant à :
mélanger une première composition contenant une première résine thermoplastique possédant un groupe hydroxyle et un plastifiant et une seconde composition contenant une seconde résine thermoplastique possédant un groupe hydroxyle et un plastifiant pour obtenir un film formant couche intermédiaire pour verre feuilleté,
la première résine thermoplastique étant une résine poly(acétal de vinyle), laquelle est obtenue par acétalisation d'un alcool polyvinylique possédant un degré de polymérisation moyen supérieur ou égal à 1500, et la seconde résine thermoplastique étant une résine poly(acétal de vinyle),
le rapport de teneur en groupe hydroxyle de la première résine thermoplastique étant supérieur à raison de 4 % en mole ou plus au rapport de teneur en groupe hydroxyle de la seconde résine thermoplastique,
la teneur en résine poly(acétal de vinyle) présentant un rapport de teneur en groupe hydroxyle inférieur à 25 % en mole étant inférieure ou égale à 4,5 % en poids dans 100 % en poids des résines poly(acétal de vinyle) comprises dans le film formant couche intermédiaire, et
le rapport de la viscosité complexe à 200 °C de la seconde composition à la viscosité complexe à 200 °C de la première composition étant inférieur à 4,5 ou la première résine thermoplastique et la seconde résine thermoplastique étant une première résine thermoplastique et une seconde résine thermoplastique qui satisfont au rapport de la viscosité complexe à 200 °C de la seconde composition obtenue par mixtion de 100 parties en poids de la seconde résine thermoplastique et de 60 parties en poids de di-2-éthylhexanoate de triéthylène glycol à la viscosité complexe à 200 °C de la première composition obtenue par mixtion de 100 parties en poids de la première résine thermoplastique et de 40 parties en poids de di-2-éthylhexanoate de triéthylène glycol devant être inférieures à 4,5, respectivement,
et la viscosité complexe à 200 °C étant mesurée sur la base du procédé selon la description.

7. Procédé de production du film formant couche intermédiaire pour verre feuilleté selon la revendication 6,
la première résine thermoplastique et la seconde résine thermoplastique étant une première résine thermoplastique et une seconde résine thermoplastique qui satisfont au rapport de la viscosité complexe à 200 °C de la seconde composition obtenue par mixtion de 100 parties en poids de la seconde résine thermoplastique et de 60 parties en poids de di-2-éthylhexanoate de triéthylène glycol à la viscosité complexe à 200 °C de la première composition obtenue par mixtion de 100 parties en poids de la première résine thermoplastique et de 40 parties en poids de di-2-éthylhexanoate de triéthylène glycol devant être inférieures à 4,5, respectivement, et la viscosité complexe à 200 °C étant mesurée sur la base du procédé selon la description.

8. Procédé de production du film formant couche intermédiaire pour verre feuilleté selon la revendication 6 ou 7, la viscosité complexe à 200 °C de la première composition étant supérieure ou égale à 4 000 Pa•s.

9. Procédé de production du film formant couche intermédiaire pour verre feuilleté selon l'une quelconque des revendications 6 à 8, le rapport de teneur du groupe hydroxyle de la première résine thermoplastique étant supérieur ou égal à 25 % en mole et le rapport de teneur du groupe hydroxyle de la seconde résine thermoplastique étant inférieur à 25 % en mole.

10. Procédé de production d'un verre feuilleté comprenant l'étape consistant à :
obtenir un film formant couche intermédiaire pour verre feuilleté par le procédé de production d'un film formant couche intermédiaire pour verre feuilleté selon l'une quelconque des revendications 6 à 9, et
disposer le film formant couche intermédiaire pour verre feuilleté entre un premier élément de verre feuilleté et un second élément de verre feuilleté pour obtenir un verre feuilleté.
